# EUROPEAN PATENT SPECIFICATION

(11) **EP 4 555 706 B1**
(45) Date of publication and mention of the grant of the patent: **18.03.2026**
(21) Application number: 23738560.4
(22) Date of filing: 07.07.2023
(51) Int. Cl.: H04N 1/60, G06T 7/90, G06V 10/56, G06F 18/23213, G06V 10/762

(54) **METHOD OF OBTAINING A COLOR SUBPALETTE FROM A MOODBOARD**
VERFAHREN ZUM ERHALTEN EINER FARBUNTERPALETTE AUS EINEM MOODBOARD
PROCÉDÉ D'OBTENTION D'UNE SOUS-PALETTE DE COULEURS À PARTIR D'UNE PLANCHE DE TENDANCES

(30) Priority: 11.07.2022 EP 22184196
(43) Date of publication of application: 21.05.2025
(73) Proprietor: Akzo Nobel Coatings International B.V., 1077 WW Amsterdam (NL)
(72) Inventor: SPIERS, Peter Mark, 1077 WW Amsterdam (NL); GIJSENIJ, Arjan, 1077 WW Amsterdam (NL)
(74) Representative: Akzo Nobel IP Department
(86) International application number: PCT/EP2023/068914
(87) International publication number: WO 2024/013027

(56) References cited:
- WO-A1-2021/209413
- US-A1- 2012 075 329
- US-A1- 2015 324 366

## Description

### Field of the invention

The invention relates to a method of obtaining a color subpalette from a moodboard. The color subpalette is obtained from a color palette that contains representative colors of a collection of digital color images (moodboard).

### Background of the invention

Consumers who wish to select one or more paint colors, for example for decorating a room, are presented with a very large number of color options to choose from. Moreover, selecting multiple paint colors that coordinate with each other, or a paint color that coordinates with a color of a piece of furniture for example, is highly subjective and can be a daunting task. Paint manufactures often provide pre-arranged, or curated, color palettes that may not reflect consumer's preferences. The invention therefore aims to facilitate the selection process by providing a consumer with a personalised color palette based on one or more color images that are selected by the consumer (moodboard).

Determining a set of representative colors from a digital color image can be useful for many applications. For example, for facilitating paint color selection the methods described herein can provide a color palette with representative colors based on one or more digital color images that are provided by a user. The user can for instance collect and input a set of one or more digital color images of his liking and is provided with a color palette based on the colors in the inputted images. The several color images can be inputted individually or constitute a single moodboard image or collage. Each image in the set of images may be weighted differently to express certain preferences in the set of images. For instance, certain images of the images that constitute the moodboard can be enlarged to amplify a weight of the colors in that particular image. US 2012/075329A1 describes a method for transforming a digital image by computing an image color palette from the image; mapping colors of the image color palette to colors of a concept color palette which represents a mood or scene and transforming the colors of the digital image based on the mapping.

WO2015/32466A1 concerns a method for conducting an image search. The method involves searching a database to locate a set of images and iteratively performing the following steps: extracting the histogram of red, green and blue (RGB) colors from a given image; distilling the extracted RGB colors down to create a reduced color palette; segmenting the extracted RGB colors into a set of segments; selecting a subset of segments to assemble a color palette for the image and updating the assembled color palette and customer behavior score for the image in the database.

WO 2021/209413A1 describes a method of determining a color palette from a digital image. The method comprises defining a predetermined number of K cluster centers within a color space; forming clusters by associating pixels to the nearest cluster centre; reducing the number of clusters to k by deleting and/or merging cluster centers according to predefined thresholds; and from each of the resulting k clusters defining a respective representative color.

When generating a color palette from a moodboard, a lot of representative colors can be identified, particularly if the moodboard contains many visually different images. Typically, to provide for a good representation of all the significant colors found in the images in the moodboard, the palette needs to contain more than 8 colors, often more than 12 colors, such as for example 16 colors or more. Such a high number of colors in a palette is however not convenient to the user, who needs to choose a paint color to use for decoration. In interior design plans normally only several colors are used, such as 2 or 3 and generally not more than 5. This means that the user needs to make a selection of only a few colors from the large color palette created from user's moodboard, which can be difficult for users not experienced in color design.

Therefore, it is desired to provide a method to obtain a color palette from a moodboard that only has a limited number of colors, such as 5 or less. The colors should be representative of the images contained in the moodboard and be obtained by a meaningful reduction of the number of colors in a color palette created from a user's moodboard. It is further desired that such method reflects user preferences with regards to other aspects important in interior design, such as preferred design styles or current trendy colors.

### Summary of the invention

The present invention provides a method of obtaining a color subpalette from a first moodboard containing one or more digital color images, said method method being implemented on a computer or a mobile device with a screen and comprising the steps of:
(1) generating a first color palette with *k₁* representative colors from the first moodboard,
(2) providing a second color palette with *k₂* colors,
**(3) ranking** the colors in the first color palette according to a scoring algorithm, which assigns a score to each of the colors in the first color palette based on its color difference with each of the colors in the second color palette, and
(4) selecting a subset of *k_{sub}* colors from the first color palette, which have the scores corresponding to the least color difference with the colors in the second color palette, said subset of colors being the color subpalette and displaying said subpalette on the screen,
wherein the first color palette is obtained from the first moodboard by a method comprising the steps of:
(a) obtaining at least one digital color image having a number, *p*, of pixels each pixel having a color value within an n-dimensional color space;
(b) defining, irrespective of the obtained image, a predetermined number of *K* cluster centers, which are distributed along a plurality of lines in cubic RGB color space intersecting at an intersection point located centrally in the cubic RGB color space, wherein *K > k₁*;
(c) forming clusters by associating for each pixel its color value with the nearest of the cluster centers; and after forming the clusters,
   c1) for each cluster, re-determining a cluster center;
(d) reducing the number of clusters to *k₁* by deleting cluster centers and/or merging clusters, wherein deleting comprises:
   - for each cluster, determining the number of pixels associated with that cluster, and
   - in case the number of pixels associated with a cluster center is below a predefined pruning threshold, deleting the cluster center;
   and wherein merging comprises:
   - determining a distance between two clusters and
   - merging those clusters which have a distance that is smaller than a predefined merging threshold;
   wherein the steps c), c1) and d) are iterated; and
(e) defining a respective representative color from each of the resulting *k₁* clusters,
(f) forming a first color palette from *k₁* representative colors.

In a second aspect, the present invention provides a method of selecting paint colors comprising the above-described method and further comprising selecting a paint color corresponding to each of the colors of the color subpalette.

In a third aspect, the present invention provides a data processing device comprising means for carrying out the steps of the method of the invention.

In a fourth aspect, the present invention provides a computer program product comprising instructions which, when the program is executed by a computer, cause the computer to carry out the steps of the method of the invention.

### Brief description of the figures

Figures 1-3 each show a schematic flow chart of a method.
Figure 4 shows a schematic example of a predetermined number of K predefined cluster centers which are distributed in the color space in a predetermined pattern.

### Detailed description of the invention

The present invention is based on a judicious insight that it is possible to reduce the number of colors in a large color palette obtained from a moodboard and create a color palette subset (color subpalette) in a way that is meaningful for the user. Meaningful for the user means that the color selection is non-random and takes into account other user preferences such as a certain theme, e.g. preferred design styles or current trend colors.

The method results in a color subpalette that contains fewer colors than the color palette originally obtained from a moodboard and only contains the colors that have the best match with user preferences represented by another (second) color palette.

In step (1) of the method according to the invention, a first color palette with *k₁* representative colors is generated from the digital color image(s) contained in a first moodboard. A moodboard is a collection of digital color images containing at least one image and preferably at least two images. A moodboard can be created by a user by selecting images that are appealing to the user.

A color palette is a collection of at least two colors. A color palette subset (color subpalette) is a color palette with a reduced number of colors compared to the original color palette, from which it is obtained. The colors in the color palette subset represent a subset of the colors from the original color palette.

The first color palette contains colors representative of the colors in the digital color image(s) in the first moodboard. The number of colors *k₁* in the first color palette is preferably at least 8, or at least 12, or more preferably at least 16.

Color palette generation from a first moodboard is done using a method that takes into account underrepresented (accent) colors contained in the moodboard. Underrepresented, or accent, colors are colors that occupy only a small region of a digital image, relative to the other colors, but have a strong contrast with respect to their surroundings. Such colors stand out to the human observer but are easily overlooked by traditional algorithms of color palette generation, which only include colors in the color palette that occupy the biggest regions of a digital image. For instance, a moodboard can be made up of several images of interior designs where dark shades of blue and grey are most prevalent. In some of the images that make up the moodboard, however, there may be small bright yellow features depicted such as a yellow pillow, which stand out in the predominantly dark blue and grey environment. Overall, this bright yellow color only covers a minor portion of the moodboard, i.e. only few pixels are yellow, but its presence is clearly perceivable by the user, and may be in the moodboard for that reason.

Such method is for example known from WO 2021/209413 A1, which contents are incorporated herewith.

Particularly, the first color palette is obtained by a method comprising the steps of:
(a) obtaining at least one digital color image having a number, p, of pixels each pixel having a color value within an n-dimensional color space;
(b) defining, irrespective of the obtained image, a predetermined number of K cluster centers which are distributed along a plurality of lines in cubic RGB color space intersecting at an intersection point located centrally in the cubic RGB color space, wherein *K > k₁*;
(c) forming clusters by associating for each pixel its color value with the nearest of the cluster centers; and after forming the clusters,
   c1) for each cluster, re-determining a cluster center;
(d) reducing the number of clusters to *k₁* by deleting cluster centers and/or merging clusters, wherein deleting comprises:
   - for each cluster, determining the number of pixels associated with that cluster, and
   - in case the number of pixels associated with a cluster center is below a predefined pruning threshold, deleting the cluster center;
   and wherein merging comprises:
   - determining a distance between two clusters and
   - merging those clusters which have a distance that is smaller than a predefined merging threshold;
   wherein the steps c), c1) and d) are iterated; and
(e) defining a respective representative color from each of the resulting *k₁* clusters,
(f) forming a first color palette from *k₁* representative colors.

In this method, the number *k₁* is pre-defined. The number *k₁* of representative colors may be defined *a priori* to any desired number but is preferably at least 8, or at least 12, or more preferably at least 16.

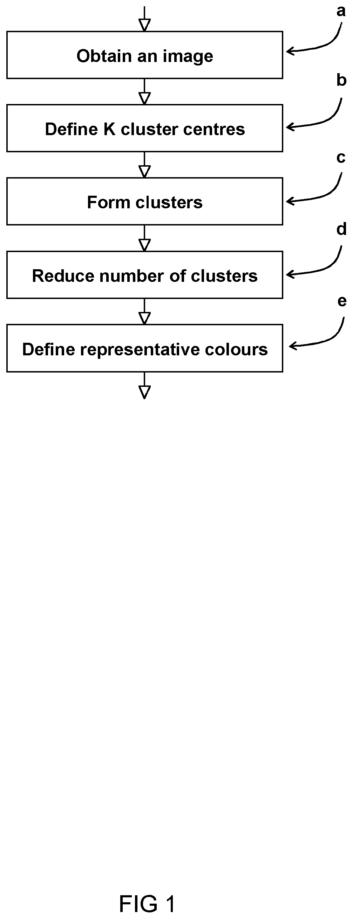

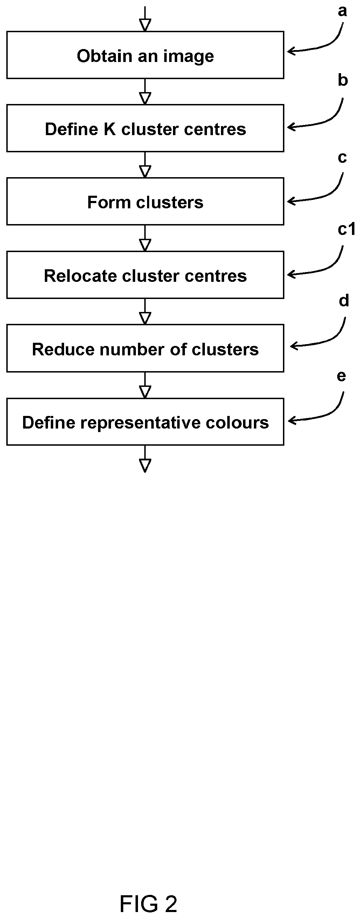

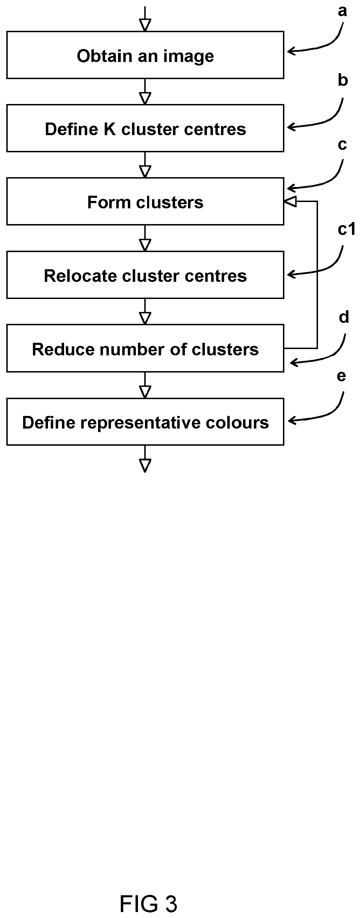

The first color palette generation method is illustrated as schematic flow charts in Figures 1-3. The first step a) of the method includes:
a) obtaining at least one digital color image having a number, *p*, of pixels each pixel having a color value within an n-dimensional color space.

This at least one digital color image may be a single image or a set of images. The single image can for example be a composition of multiple color images, e.g. constituting a moodboard that reflects a personal preference of a user. Typically, digital color images are represented by a red, green, and blue channel, wherein each pixel has red, green and blue color value assigned to it. In a 24-bit digital image each channel has 8-bits, such that each pixel can have 256 different red, 256 different green and 256 different blue color values, for example on a scale from 0 to 255. The n-dimensional color space can thus be a three-dimensional RGB-space, wherein the three axes of the RGB-space define red, green and blue color values. The color value of each pixel can be represented with a vector in the 256×256×256 RGB-vector space. It will be appreciated that the color space can also be another color space such as a CMYK-space, CIELAB-space or CIEXYZ space.

A subsequent step of the method is:
b) defining, irrespective of the obtained image, a predetermined number of *K* cluster centers, which are distributed along a plurality of lines in cubic RGB color space intersecting at an intersection point located centrally in the cubic RB color space, wherein *K > k₁.*

The number *K* of initial cluster centers are dispersed in the color space. The number of *K* predefined clusters thereby exceeds the number of *k₁* representative colors. Since the *K* initial cluster centers are predefined and distributed in the color space in a predetermined pattern, the initialisation in step b) is non-random and the method gives reproducible results for a given digital color image. In other words, repeatedly performing the method on the same digital color image results in the same set of resultant representative colors.

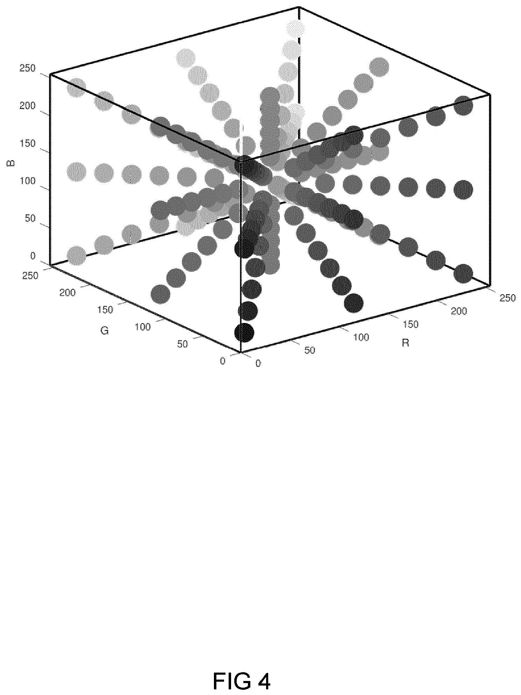

Figure 4 shows a pattern of how the *K* initial clusters can be seeded in the color space. Particularly, Figure 4 shows a particular distribution of *K* predefined cluster centers, that are distributed along multiple straight lines, e.g. 13, in the RGB color space, e.g. extending between opposing corners, rib midpoints, and centers of planes of the RGB space. The lines intersect at a central point in the RGB space and create a star-like configuration of predefined cluster centers. With this star-shaped initialisation the *K* initial cluster centers are well dispersed in the color space and efficiently span color space as observed by human eyes. The cluster centers are preferably evenly spread out (in a regular way) in the color space, i.e. within the same distance from each other. In this way, it becomes even more likely that the method identifies underrepresented colors, i.e. small scale and/or isolated clusters, in the at least one digital color image.

Step c) of the method includes forming clusters by associating for each pixel its color value with the nearest of the cluster centers. The nearest cluster center from a pixel may be based on a Euclidean distance or any other distance metric. A cluster is defined by the set of pixel color values that are associated with a single cluster center. Some clusters may be empty when a cluster center has no pixel color values associated therewith.

In step c1), after forming the clusters, for each cluster, a cluster center is re-determined. The re-determined cluster center of a cluster can for example be a color value which minimises a variance within the cluster, such as a mean value of the color values in that cluster. Other options for re-determining the cluster centers of a cluster include setting the cluster center to a median, medoid or other value of the color values in that cluster. The re-determined cluster center can be a constituent color value of the cluster, i.e. a member of the cluster's color values, but this is not necessarily the case.

Step (d) of the method includes reducing the number of clusters to *k₁* by deleting cluster centers and/or merging clusters, wherein deleting comprises:
- for each cluster, determining the number of pixels associated with that cluster, and
- in case the number of pixels associated with a cluster center is below a predefined pruning threshold, deleting the cluster center;
and wherein merging comprises:
- determining a distance between two clusters and
- merging those clusters which have a distance that is smaller than a predefined merging threshold.

To obtain a predetermined number *k₁* of representative colors, it is desired to reduce the number of clusters and cluster centers from *K* to *k₁.* This is done by merging of clusters and/or deleting cluster centers. Preferably both deleting and merging of clusters is performed. It can be preferred to set the pruning threshold to zero, so that only cluster centers of empty clusters that have no pixels in the cluster are deleted. In some embodiments, when cluster centers of non-empty clusters are removed, the pixels that have been previously assigned to this cluster can be marked as unallocated or allocated to a cluster with the closest cluster center. If they are marked as unallocated, then in the next iteration it is possible to assign them to a different new cluster. Clusters with the centers that are close to each other can be merged, as these clusters are likely to represent similar colors. The similarity between clusters can be defined by a distance between their respective cluster centers. The merging threshold can be defined as a distance, wherein two clusters are merged in case that a distance between them is less than this threshold distance. The merging and/or pruning threshold may be adjusted such that the number of clusters are reduced from *K* to *k₁.*

The term "distance" used herein refers to a similarity or dissimilarity between elements in the color space. It will be appreciated that any distance metric can be used within the scope of this method to determine a similarity or distance between elements in the color space, e.g. 1-norm, 2-norm, 3-norm, ∞-norm, etc. For instance, a distance between two color values in the color space can be expressed as a Euclidean distance i.e. a 2-norm distance. In this regard, the "nearest" cluster center to a particular color value of a pixel is that particular cluster center for which the distance metric between that color value and any cluster center is minimised.

Also in this regard, a distance between two clusters refers to a similarity or dissimilarity between clusters. For example, a distance between two clusters may be defined as a distance between their respective cluster centers, or between their respective cluster boundaries. Preferably, a distance between two clusters is a distance between their respective cluster centers.

Clusters are merged by e.g. removing one or more cluster centers from a group of clusters that are similar to each other. For example, two similar clusters can be merged into a single cluster by deleting either one of the cluster centers, for instance the cluster center which has the smallest or largest number of pixels associated therewith. Optionally, the least chromatic cluster center is deleted, to steer away from substantially achromatic colors (e.g. black, white and grey shades) in the color space. The pixel values that were associated with the deleted cluster center, can be re-associated with any of the remaining cluster centers. Similar clusters can also be merged by deleting the old cluster centers and defining a new cluster center that is based on the color values of the similar clusters and/or old cluster centers. The new cluster center may for example be set to an average or weighted average of the similar clusters and/or their respective centers.

Steps c), c1) and d) can be iterated until a convergence criterion is met. In this embodiment, after step d) has been completed, the method continues with step c) instead of step e). After a certain convergence criterion is met, the method continues with step e) after step d). The convergence criterion may be predefined number of iterations and/or a convergence metric. The convergence criterion may be that the number of clusters is reduced from *K* to *k₁.* Iterating steps c) and c1) resemble steps taken in commonly known clustering techniques, such as k-means clustering and similar, in which the cluster centers converge to a local optimum. Including step d) in the iteration provides a convergence of the number of cluster centers from *K* predefined clusters to *k₁* clusters. The clusters are iteratively reduced from *K* to *k₁* by the relocation of the cluster centers in step c1). Cluster centers may relocate from their predefined positions (step b)) such that a distance between some cluster centers becomes smaller every iteration. Some cluster centers for example converge to the same local optimum, and at some point, define smaller distance between them than the predefined merging threshold. Those clusters are merged in step d), until *k₁* clusters result. It may be possible that the method does not converge to *k₁* clusters. In such case the pruning threshold and/or merging threshold may need to be set to a different value, e.g. manually.

After reduction of the number of clusters in step d), the method includes a step of:
e) defining a respective representative color from each of the resulting *k₁* clusters.

The representative color may for example be the respective mean color value of the clusters or cluster centers. The representative color may also be a constituent color, i.e. a color value that is a member of the *p* pixels in the original digital color image. In that case, a pixel color value may be selected that is closest to the mean color value of a cluster (or center of the cluster), or alternatively, a median or medoid value of a cluster can define the representative color of the cluster.

Finally, in step (f) the defined *k₁* representative colors form the first color palette.

As a result of step (1), a first color palette is generated. When the described method is implemented on a computer or a mobile device with a screen, this color palette is preferably hidden to the user (not displayed on the screen).

In step (2), a second color palette with *k₂* colors is provided. The second color palette can for example contain colors that are representative of a certain design style (contemporary, industrial, romantic, etc.) or a certain word or phrase (airy, foggy, bright skies). In such cases the second color palette can be obtained from digital color images representing respective design style, word or phrase. Suitably, the second color palette can be generated from a second moodboard containing one or more digital color images. Preferably, the second color palette is generated from the second moodboard using the above-described algorithm for the first color palette that takes account of accent colors.

In other embodiments, the second color palette is not obtained from a moodboard but is already an existing color palette, e.g. curated by a paint manufacturer or compiled by a designer. An example of such a palette would be a color palette containing trendy colors of a certain year, e.g. Sikkens ColorFutures^{™} of AkzoNobel.

The number *k₂* of colors in the second color palette is not essential, any number that is practical can be used. It can be the same number as *k₁*, or a lower, or a higher number. In some embodiments, the number of colors *k₂* is preferably at least 8, or at least 12, or more preferably at least 16. In other embodiments, the number of colors *k₂* can be less than 8, such as 5 or less. The number of colors *k₂* can also be 1, meaning that the second color palette consists of only one color.

In step (3), the colors in the first color palette are ranked according to a scoring algorithm, which assigns a score to each of the colors in the first color palette based on its color difference with each of the colors in the second color palette. In this step the colors in the first color palette are compared with the colors in the second color palette. This is done using a scoring algorithm.

Any suitable scoring algorithm that allows to compare sets of colors with each other and produce a score assigned to each of the colors can be used. Preferably, the scoring algorithm comprises the steps of, for each color of the first color palette, calculating a color difference with each of the colors in the second color palette, determining the least color difference from all the obtained color differences and assigning a score to the color from the first color palette based on the least color difference, resulting in assigning scores to all of the colors of the first color palette.

Color difference is expressed as a value. Color difference between two colors can be based on the distance between these colors in an n-dimensional color space. Integer n can be any possible integer, e.g. 1, 2, 3, and higher numbers, e.g. 6, 9, 12. For example, a three-dimensional RGB space or CIELAB space, preferably CIELAB space, can be used. It will be appreciated that the color space can also be another color space such as HSV or HSL space. Known algorithms for calculating color differences can be used, e.g. CIEDE2000 color difference equation. Color difference is not constrained to a multi-dimensional color space. Color difference also includes difference in lightness or chroma, which represent respective dimensions in multi-dimensional color spaced. For example, chroma (C) is a dimension in the 3-dimensional CIE-LCh space. Lightness (L) is a dimension from the 3-dimensional CIE-LAB space (or Y from CIE-XYZ space).

When all of the colors of the first color palette received scores based on the above-described criteria, the colors of the first color palette are ranked according to their scores, e.g. from the lowest to the highest score or vice versa. Depending on the used scoring algorithm, the highest score can for example represent the least color difference with the second color palette. The colors with the highest score will then represent the colors with the lowest color difference to the second color palette.

Accordingly, in step (4) a subset of *k_{sub}* colors is selected from the first color palette, which colors have the least color difference (e.g. the highest score) with the colors in the second color palette, said subset of colors being the color subpalette. The number *k_{sub}* corresponds to the desired number of colors in the final color subpalette and is preferably a predefined number. The number **of colors** *k_{sub}* is normally less than 8, preferably 5 or less, more preferably 2, 3 or 4. In any case, the number of colors *k_{sub}* is less than the number of colors *k₁* in the first color palette.

For example, the first color palette can contain 16 colors and the second color palette 9 colors. First, the color difference between the first color of a 16-color palette and all colors of the second color palette (with 9 colors) is calculated, resulting in 9 color difference values for the first color. The assigned score for this color is then the lowest color difference, i.e., the color difference of the first color of the 16-color palette to its closest match in the 9-color palette. Then, the process moves on to the second color in the 16-color palette and repeats the comparison with all the 9 colors in the second color palette, calculating and assigning a score for the second color in the 16-color palette. This process is repeated for all 16 colors, ending up with 16 scores - one score for each color. The final 4-color palette is determined by selecting the 4 colors with the lowest scores out of the 16-color palette.

In some embodiments the second color palette can only contain one color, e.g. blue. In that case the targeted subpalette will contain colors with the lowest color difference score to that particular color, e.g., the most blue-ish colors from the first color palette.

As a further stop, optionally, the colors in the obtained subpalette can be compared with and converted to standard paint colors (e.g. of commercially available paints). This can be done by replacing the colors in the subpalette by the most similar standard paint colors. Color difference can be calculated in the same way as described above. The advantage of this is that the user obtains a color subpalette, which only shows colors that are commercially available e.g. as a wall paint or wood paint.

In one embodiment, the method of selecting paint colors wherein each color of the color subpalette is replaced with the most similar paint color available from a commercially available range of paint colors.

The described method is implemented on a computer or a mobile device with a screen. The color subpalette obtained in step (4) is displayed to the user on the screen. Any suitable color screen that is conventionally used with computers and mobile devices can be used.

After the color subpalette is obtained in step (4), it is possible to prepare paint of any one of the colors contained in the subpalette. This can for instance be performed using a paint mixing device, as common in paint industry.

The present invention further provides a data processing device comprising means for carrying out the steps of the above-described method. The method can be executed on a data processing device such as a point-of-sale computer system or a mobile computing system comprising a display, e.g. a smartphone, tablet, laptop computer or the like. The display is preferably a color display.

The present invention also provides a computer program product comprising instructions which, when the program is executed by a computer, cause the computer to carry out the steps of the method of the invention. The computer program product can be an app or web-based software, loaded and executed on a general-purpose computer or a mobile computing system.

In one embodiment, the computer program will cause the computer to output an identifier for each color of the color subpalette, which identifier is for a color of paint. For example the identifier may be a code or a name identifying the color from a range of paint colors.

In one embodiment, the computer program will cause the computer to output a link to an ordering platform, from which paint of at least one color of the color subpalette may be ordered. The ordering platform may for example be in a mobile computing system application or a web browser. The ordering platform may be for example a webshop.

It will be appreciated that all features and options mentioned in view of the method apply equally to the systems and computer program product, and vice versa. It will also be clear that any one or more of the above aspects, features and options can be combined.

In the claims, any reference sign placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. Method of obtaining a color subpalette from a first moodboard containing one or more digital color images, said method being implemented on a computer or a mobile device with a screen and comprising the steps of:
(1) generating a first color palette with *k₁* representative colors from the first moodboard,
(2) providing a second color palette with *k₂* colors,
(3) ranking the colors in the first color palette according to a scoring algorithm, which assigns a score to each of the colors in the first color palette based on its color difference with each of the colors in the second color palette, and
(4) selecting a subset of *k_{sub}* colors from the first color palette, which have the scores corresponding to the least color difference with the colors in the second color palette, said subset of colors being the color subpalette and displaying said subpalette on the screen,
wherein the first color palette is obtained from the first moodboard by a method comprising the steps of:
(a) obtaining at least one digital color image having a number, *p*, of pixels each pixel having a color value within an n-dimensional color space;
(b) defining, irrespective of the obtained image, a predetermined number of *K* cluster centers, which are distributed along a plurality of lines in cubic RGB color space intersecting at an intersection point located centrally in the cubic RGB color space, wherein *K > k₁*;
(c) forming clusters by associating for each pixel its color value with the nearest of the cluster centers; and
c1) after forming the clusters, for each cluster, re-determining a cluster center;
(d) reducing the number of clusters to *k₁* by deleting cluster centers and/or merging clusters, wherein deleting comprises:
- for each cluster, determining the number of pixels associated with that cluster,
and
- in case the number of pixels associated with a cluster center is below a predefined pruning threshold, deleting the cluster center;
and wherein merging comprises:
- determining a distance between two clusters and
- merging those clusters which have a distance that is smaller than a predefined merging threshold;
wherein the steps c), c1) and d) are iterated; and
(e) defining a respective representative color from each of the resulting *k₁* clusters,
(f) forming a first color palette from *k₁* representative colors.

2. The method of claim 1, wherein the second color palette is generated from a second moodboard containing one or more digital color images.

3. The method of claim 2, wherein the digital color images in the second color palette represent a design style, word or phrase.

4. The method of claim 1, wherein the colors in the second color palette are selected by a designer.

5. The method of any one of claims 1-4, wherein the scoring algorithm comprises the steps of, for each color of the first color palette, calculating a color difference with each of the colors in the second color palette, determining the least color difference from all the obtained color differences and assigning a score to the color from the first color palette based on this least color difference, resulting in assigning scores to all of the colors of the first color palette.

6. The method of any one of claims 1-5, wherein *k₁* is at least 12.

7. The method of any one of claims 1-6, wherein *k_{sub}* is 5 or less.

8. A method of selecting paint colors comprising the method of any one of claims 1 to 7 and further comprising selecting a paint color corresponding to each of the colors of the color subpalette.

9. A method according to claim 8, wherein each color of the color subpalette is replaced with the most similar paint color available from a commercially available range of paint colors.

10. A data processing device comprising means for carrying out the steps of the method of any one of claims 1-9.

11. A computer program product comprising instructions which, when the program is executed by a computer, cause the computer to carry out the steps of the method of any one of claims 1-9.

12. A computer program product according to claim 11, which will cause the computer to output an identifier for each color of the color subpalette, which identifier is for a color of paint.

13. A computer program according to claim 11 or claim 12, which computer program will cause the computer to output a link to an ordering platform, from which paint of at least one color of the color subpalette may be ordered.

## Patentansprüche

1. Verfahren zum Erhalten einer Farbunterpalette aus einem ersten Moodboard, das ein oder mehrere digitale(s) Farbbild(er) enthält, wobei das Verfahren auf einem Computer oder einer mobilen Vorrichtung mit einem Bildschirm implementiert wird und die Schritte umfasst:
(1) Erzeugen einer ersten Farbpalette mit k₁ repräsentativen Farben aus dem ersten Moodboard,
(2) Bereitstellen einer zweiten Farbpalette mit k₂ Farben,
(3) Einstufen der Farben in der ersten Farbpalette gemäß einem Bewertungsalgorithmus, der jeder der Farben in der ersten Farbpalette basierend auf ihrem Farbunterschied zu jeder der Farben in der zweiten Farbpalette eine Bewertung zuweist, und
(4) Auswählen eines Untersatzes von k_{Unter} Farben aus der ersten Farbpalette, die die Bewertungen aufweisen, die dem geringsten Farbunterschied zu den Farben in der zweiten Farbpalette entsprechen, wobei der Untersatz von Farben die Farbunterpalette ist, und Anzeigen der Unterpalette auf dem Bildschirm,
wobei die erste Farbpalette vom ersten Moodboard durch ein Verfahren erhalten wird, das die Schritte umfasst:
(a) Erhalten mindestens eines digitalen Farbbilds mit einer Anzahl, p, von Pixeln, wobei jedes Pixel einen Farbwert innerhalb eines n-dimensionalen Farbraums aufweist;
(b) Definieren, unabhängig vom erhaltenen Bild, einer vorbestimmten Anzahl von K Cluster-Zentren, die entlang einer Vielzahl von Linien in einem kubischen RGB-Farbraum verteilt sind, der sich an einem Schnittpunkt schneidet, der sich zentral im kubischen RGB-Farbraum befindet, wobei K > k₁;
(c) Bilden von Clustern durch Assoziieren, für jedes Pixel, seines Farbwerts mit dem nächstgelegenen der Cluster-Zentren; und
c1) nach dem Bilden der Cluster, für jeden Cluster, erneutes Bestimmen eines Cluster-Zentrums;
(d) Reduzieren der Anzahl von Clustern auf k₁ durch Löschen von Cluster-Zentren und/oder Zusammenführen von Clustern, wobei das Löschen umfasst:
- für jeden Cluster, Bestimmen der Anzahl von Pixeln, die mit diesem Cluster assoziiert sind, und
- falls die Anzahl von Pixeln, die mit einem Cluster-Zentrum assoziiert sind, unter einem vordefinierten Bereinigungsschwellenwert liegt, Löschen des Cluster-Zentrums;
und wobei das Zusammenführen umfasst:
- Bestimmen eines Abstands zwischen zwei Clustern und
- Zusammenführen der Cluster, deren Abstand kleiner als ein vordefinierter Zusammenführungsschwellenwert ist;
wobei die Schritte c), c1) und d) iteriert werden; und
(e) Definieren einer jeweiligen repräsentativen Farbe aus jedem der resultierenden k₁ Cluster,
(f) Bilden einer ersten Farbpalette aus k₁ repräsentativen Farben.

2. Verfahren nach Anspruch 1, wobei die zweite Farbpalette aus einem zweiten Moodboard erzeugt wird, das ein oder mehrere digitale(s) Farbbild(er) enthält.

3. Verfahren nach Anspruch 2, wobei die digitalen Farbbilder in der zweiten Farbpalette einen Designstil, ein Wort oder eine Phrase repräsentieren.

4. Verfahren nach Anspruch 1, wobei die Farben in der zweiten Farbpalette durch einen Designer ausgewählt werden.

5. Verfahren nach einem der Ansprüche 1 bis 4, wobei der Bewertungsalgorithmus die Schritte, für jede Farbe der ersten Farbpalette, des Berechnens eines Farbunterschieds zu jeder der Farben in der zweiten Farbpalette, des Bestimmens des geringsten Farbunterschieds aus allen erhaltenen Farbunterschieden und des Zuweisens einer Bewertung zur Farbe aus der ersten Farbpalette basierend auf diesem geringsten Farbunterschied, was in einem Zuweisen von Bewertungen zu allen Farben der ersten Farbpalette resultiert, umfasst.

6. Verfahren nach einem der Ansprüche 1 bis 5, wobei k₁ mindestens 12 ist.

7. Verfahren nach einem der Ansprüche 1 bis 6, wobei k_{Unter} 5 oder weniger ist.

8. Verfahren zum Auswählen von Farbfarben, das das Verfahren nach einem der Ansprüche 1 bis 7 umfasst und ferner ein Auswählen einer Farbfarbe, die jeder der Farben der Farbunterpalette entspricht, umfasst.

9. Verfahren nach Anspruch 8, wobei jede Farbe der Farbunterpalette durch die ähnlichste Farbfarbe ersetzt wird, die aus einem kommerziell erhältlichen Bereich von Farbfarben verfügbar ist.

10. Datenverarbeitungsvorrichtung, die ein Mittel zum Ausführen der Schritte des Verfahrens nach einem der Ansprüche 1 bis 9 umfasst.

11. Computerprogrammprodukt, das Anweisungen umfasst, die, wenn das Programm durch einen Computer ausgeführt wird, bewirken, dass der Computer die Schritte des Verfahrens nach einem der Ansprüche 1 bis 9 ausführt.

12. Computerprogrammprodukt nach Anspruch 11, das bewirkt, dass der Computer eine Kennung für jede Farbe der Farbunterpalette ausgibt, wobei die Kennung für eine Farbfarbe ist.

13. Computerprogramm nach Anspruch 11 oder Anspruch 12, wobei das Computerprogramm bewirkt, dass der Computer eine Verbindung zu einer Bestellplattform ausgibt, von der Farbe mindestens einer Farbe der Farbunterpalette bestellt werden kann.

## Revendications

1. Procédé d'obtention d'une sous-palette de couleurs à partir d'une première planche de tendance contenant une ou plusieurs images en couleurs numériques, ledit procédé étant mis en œuvre sur un ordinateur ou un appareil mobile muni d'un écran et comprenant les étapes suivantes :
(1) générer une première palette de couleurs comprenant k₁ couleurs représentatives à partir de la première planche de tendance,
(2) fournir une deuxième palette de couleurs comprenant k₂ couleurs,
(3) classer les couleurs de la première palette de couleurs selon un algorithme de notation, qui attribue une note à chacune des couleurs de la première palette de couleurs en fonction de sa différence de couleur avec chacune des couleurs de la deuxième palette de couleurs, et
(4) sélectionner un sous-ensemble de k_{sub} couleurs dans la première palette de couleurs, dont les notes correspondent à la moindre différence de couleur avec les couleurs de la deuxième palette de couleurs, ledit sous-ensemble de couleurs étant la sous-palette de couleurs, et afficher ladite sous-palette sur l'écran,
où la première palette de couleurs est obtenue à partir de la première planche de tendance par un procédé comprenant les étapes suivantes :
(a) obtenir au moins une image numérique en couleurs ayant un nombre p de pixels, chaque pixel ayant une valeur de couleur au sein d'un espace colorimétrique à n dimensions ;
(b) définir, quelle que soit l'image obtenue, un nombre prédéterminé de K centres de grappes, qui sont répartis le long d'une pluralité de lignes dans l'espace colorimétrique RVB cubique se coupant en un point d'intersection situé de manière centrale dans l'espace colorimétrique RVB cubique, K > k₁ ;
(c) former des grappes en associant pour chaque pixel sa valeur de couleur avec les centres de grappes les plus proches ; et
c1) après formation des grappes, pour chaque grappe, redéterminer un centre de grappe ;
(d) réduire le nombre de grappes à k₁ en supprimant des centres de grappes et/ou en fusionnant des grappes, la suppression comprenant les étapes suivantes :
- pour chaque grappe, déterminer le nombre de pixels associés à cette grappe, et
- dans le cas où le nombre de pixels associés à un centre de grappe est inférieur à un seuil d'élagage prédéfini, supprimer le centre de grappe ;
et où la fusion comprend les étapes suivantes :
- déterminer une distance séparant deux grappes, et
- fusionner les grappes qui présentent une distance inférieure à un seuil de fusion prédéfini ;
où les étapes c), c1) et d) sont itérées ; et
(e) définir une couleur représentative respective à partir de chacune des k₁ grappes résultantes,
(f) former une première palette de couleurs à partir de k₁ couleurs représentatives.

2. Procédé selon la revendication 1, dans lequel la deuxième palette de couleurs est générée à partir d'une deuxième planche de tendance contenant une ou plusieurs images numériques en couleurs.

3. Procédé selon la revendication 2, dans lequel les images numériques en couleurs dans la deuxième palette de couleurs représentent un style de conception, un mot ou une phrase.

4. Procédé selon la revendication 1, dans lequel les couleurs dans la deuxième palette de couleurs sont sélectionnées par un concepteur.

5. Procédé selon l'une quelconque des revendications 1 à 4, dans lequel l'algorithme de notation comprend les étapes comprenant, pour chaque couleur de la première palette de couleurs, de calculer une différence de couleur avec chacune des couleurs de la deuxième palette de couleurs, de déterminer la différence de couleur la plus faible à partir de toutes les différences de couleur obtenues et d'attribuer une note à la couleur de la première palette de couleurs sur la base de cette différence de couleur la plus faible, ce qui permet d'attribuer des notes à toutes les couleurs de la première palette de couleurs.

6. Procédé selon l'une quelconque des revendications 1 à 5, dans lequel k₁ est au moins 12.

7. Procédé selon l'une quelconque des revendications 1 à 6, dans lequel k_{sub} est 5 ou moins.

8. Procédé de sélection de couleurs de peinture comprenant le procédé selon l'une quelconque des revendications 1 à 7 et comprenant en outre de sélectionner une couleur de peinture correspondant à chacune des couleurs de la sous-palette de couleurs.

9. Procédé selon la revendication 8, dans lequel chaque couleur de la sous-palette de couleurs est remplacée par la couleur de peinture la plus similaire disponible dans une gamme de couleurs de peinture disponible dans le commerce.

10. Dispositif de traitement de données comprenant des moyens pour exécuter les étapes du procédé selon l'une quelconque des revendications 1 à 9.

11. Produit programme informatique comprenant des instructions qui, lorsque le programme est exécuté par un ordinateur, amènent l'ordinateur à exécuter les étapes du procédé selon l'une quelconque des revendications 1 à 9.

12. Produit programme informatique selon la revendication 11, qui amènera l'ordinateur à délivrer en sortie un identificateur pour chaque couleur de la sous-palette de couleurs, lequel identificateur correspondant à une couleur de peinture.

13. Programme informatique selon la revendication 11 ou la revendication 12, lequel programme informatique amènera l'ordinateur à délivrer en sortie une liaison vers une plate-forme de commande, auprès de laquelle la peinture d'au moins une couleur de la sous-palette de couleurs peut être commandée.
